(19) Europäisches Patentamt
European Patent Office
Office européen des brevets

(11) **EP 3 446 068 B1**

(12) **EUROPÄISCHE PATENTSCHRIFT**

(45) Veröffentlichungstag und Bekanntmachung des Hinweises auf die Patenterteilung:
**29.01.2020 Patentblatt 2020/05**

(21) Anmeldenummer: **17716547.9**

(22) Anmeldetag: **11.04.2017**

(51) Int Cl.:
**G01C 19/72** *(2006.01)*

(86) Internationale Anmeldenummer:
**PCT/EP2017/058677**

(87) Internationale Veröffentlichungsnummer:
**WO 2017/182331 (26.10.2017 Gazette 2017/43)**

(54) **PHASENMODULATOR FÜR FASEROPTISCHE KREISEL, FASEROPTISCHER KREISEL UND VERFAHREN ZUM BETREIBEN EINES PHASENMODULATORS**

PHASE MODULATOR FOR A FIBRE-OPTIC GYROSCOPE, FIBRE-OPTIC GYROSCOPE AND METHOD FOR OPERATING A PHASE MODULATOR

MODULATEUR DE PHASE POUR GYROSCOPE À FIBRE OPTIQUE, GYROSCOPE À FIBRE OPTIQUE ET PROCÉDÉ POUR FAIRE FONCTIONNER UN MODULATEUR DE PHASE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.04.2016 DE 102016107561**

(43) Veröffentlichungstag der Anmeldung:
**27.02.2019 Patentblatt 2019/09**

(73) Patentinhaber: **Northrop Grumman LITEF GmbH 79115 Freiburg (DE)**

(72) Erfinder:
• SPAHLINGER, Günter
  70188 Stuttgart (DE)
• DEPPE-REIBOLD, Olaf
  79312 Emmendingen (DE)

(74) Vertreter: **Müller Hoffmann & Partner Patentanwälte mbB St.-Martin-Strasse 58 81541 München (DE)**

(56) Entgegenhaltungen:
EP-A1- 0 652 417     EP-A1- 2 778 611
DE-A1- 3 144 162

**Beschreibung**

Die Erfindung betrifft ein Steuersystem für einen faseroptischen Kreisel, sowie einen faseroptischen Kreisel, insbesondere ein faseroptisches Sagnac-Interferometer und ein Verfahren zum Betreiben eines Phasenmodulators eines faseroptischen Kreisels.

Faseroptische Kreisel, wie z.B. Sagnac-Interferometer, werden in Drehratensensoren in Inertialnavigationssystemen eingesetzt.

Inertiale Navigationssysteme sind auf vielfältige Weise realisierbar, wobei in der Regel ein Erfassen von auf ein Objekt wirkenden Kräften bzw. Beschleunigungen und die anliegenden Drehraten einer Positionsbestimmung zugrunde liegen. Anstelle von mechanischen Effekten können auch optische Effekte zur Bestimmung der Drehraten für Inertialnavigationssysteme ausgenutzt werden. Ein derartiges Inertialnavigationssystem kann auf wenigstens einem faseroptischen Kreisel, wie etwa einem Sagnac-Interferometer basieren. Dieses nutzt den Sagnac-Effekt aus, gemäß dem bei einer Rotation einer optischen Lichtleiterschleife um ihre Normale ein optischer Wegunterschied zwischen zwei in der Lichtleiterschleife entgegengesetzt laufenden Lichtstrahlen auftritt. Bei der Beobachtung des aus der Lichtleiterschleife austretenden und überlagerten Lichts der beiden Lichtstrahlen wird während der Rotation eine Intensitätsänderung sichtbar, die durch eine Interferometerkennlinie beschrieben werden kann, die die Intensitätsänderung in Abhängigkeit der Phasendifferenz der beiden Lichtwellen beschreibt. Anders ausgedrückt ruft eine auf einen faseroptischen Kreisel, wie etwa ein Sagnac-Interferometer, einwirkende Drehbewegung eine Phasenverschiebung zwischen den beiden entgegengesetzt umlaufenden Lichtstrahlen hervor, so dass am Ort der Überlagerung beider Strahlen eine von der Drehbewegung abhängige Intensitätsänderung beobachtet werden kann.

Die Phasenverschiebung in einem faseroptischen Sagnac-Interferometer ist direkt proportional zu der Drehgeschwindigkeit, der Weglänge des Lichtwegs in der Lichtleiterschleife bzw. einer Lichtleiterspule und dem Durchmesser des kreisförmigen Lichtwegs. Die Phasenverschiebung verhält sich außerdem umgekehrt proportional zur Wellenlänge des eingesetzten Lichts.

Die oben bereits erwähnte Interferometerkennlinie, die die Abhängigkeit der Lichtintensität, die als Beobachtungsgröße zur Bestimmung der Rotation dienen soll, von der Phasendifferenz beschreibt, ist kosinusförmig.

Da eine entsprechende Transferfunktion im Maximum der Kosinus-Kurve unempfindlich gegenüber kleinen Eingangswerten ist und ein der Drehrichtung entsprechendes Vorzeichen der Phasenverschiebung nicht ermittelbar ist, wird durch Phasenmodulation häufig ein Arbeitspunkt des faseroptischen Kreisels derart eingestellt, dass er im Punkt einer maximalen Steigung der KosinusFunktion liegt. Hierzu kommen beispielsweise Sinus- oder Rechteckmodulationen infrage. Somit soll bereits bei einer geringen Drehbewegung eine maximale Empfindlichkeit des Interferometers gewährleistet sein.

Ein Drehratensensor, der einen faseroptischen Kreisel enthält, weist meist einen Integrierten Optischen Multifunktions-Chip (multifunctional integrated optical chip, MIOC) als Phasenmodulator auf, mithilfe dessen eine Phasenmodulation von durchlaufenden Lichtstrahlen durchführbar ist. Der MIOC ist in der Regel Teil eines Regelkreises zum Einstellen der oben beschriebenen Phasenmodulation mittels eines Steuersignals. Physikalische Effekte im MIOC, z. B. bewegliche Ladungsträger, verursachen eine Abhängigkeit der Phasenmodulation von der Frequenz des Steuersignals. Der MIOC weist also einen Frequenzgang auf, aufgrund dessen auf unterschiedliche Frequenzen unterschiedliche Frequenzantworten erfolgen, insbesondere ist ein Antwortverhalten des MIOC bei kleinen Frequenzen weniger stark ausgeprägt als bei großen Frequenzen. Da dieses Phänomen auch auf die Beweglichkeit der Ladungsträger im MIOC zurückgeht, liegt auch eine Abhängigkeit des MIOC-Frequenzgangs von der Umgebungstemperatur bzw. der Temperatur des MIOC selbst vor.

Die EP 0 652 417 A1 befasst sich z.B. mit der Nutzung eines integriert optischen Chips als Michelson-Interferometer zur Stabilisierung der Wellenlänge einer Lichtquelle innerhalb eines faseroptischen Sagnac-Interferometers zur Drehratenmessung, bei dem ein im integriert optischen Chip enthaltener Phasenmodulator außer durch eine digitale, drehratenabhängige Phasenrampe zur Rückstellung auch mit einem statistisch unabhängigen zweiten Signalanteil beaufschlagt wird, der den Arbeitspunkt des Phasenmodulators optimiert. Bei dieser Art von statistisch unabhängiger Veränderung der Phasenmodulation lässt sich aus dem Detektorauslesesignal das lichtwellenlängenabhängige Messsignal des Michelson-Interferometers demodulieren und zur Nachregelung der Lichtquellenwellenlänge über eine Lichtquellentemperaturänderung und/oder Injektionsstromänderung für die Lichtquelle verwenden. Bei Open-Loop-Betrieb lassen sich aus dem lichtwellenlängenabhängigen Messsignal Änderungen des Skalenfaktors kompensieren.

Die DE 31 44 162 A1 befasst sich mit dem Messen einer nichtreziproken Phasenverschiebung in einem Ringinterferometer. Es wird insbesondere ein Ringinterferometer mit optischen Phasenverschiebungsvorrichtungen diskutiert, die auf die den Ring durchlaufenden Strahlungen einwirken. Diese Vorrichtungen enthalten einen Oszillator, der eine periodische Spannung der Frequenz $1/2\tau$ liefert, wobei $\tau$ die Zeitdauer ist, die die Strahlung zum Durchlaufen des Rings benötigt, und sie enthalten ferner einen Sägezahngenerator, dessen Resonanzfrequenz der nichtreziproken Phasenverschiebung nachgeregelt wird.

Die EP 2 778 611 A1 betrifft ein faseroptisches Sagnac-Interferometer in einem Drehratensensor, das einen Integrierten Optischen Multifunktions-Chip mit einer MIOC-Übertragungsfunktion aufweist. Dem Integrierten Optischen Multifunktions-Chip ist ein Digitalfilter vorgeschaltet, dessen Filter-Übertragungsfunktion im Wesentlichen der inversen MIOC-Übertragungsfunktion entspricht, sodass die MIOC-Übertragungsfunktion durch die Filter-Übertragungsfunktion kompensierbar ist. Entsprechende Koeffizienten der Filter-Übertragungsfunktion sind in einem Hauptregelkreis bestimmbar.

Der oben beschriebene MIOC-Frequenzgang führt zu einer speziellen Form des Lock-in-Effekts, der sich darin äußert, dass bei tatsächlichen geringen Drehraten um 0°/h eine Häufung von Ausgangssignalen auftritt, die einer Drehrate von 0°/h entsprechen. Die daraus hervorgehende Unempfindlichkeit eines faseroptischen Kreisels, wie etwa eines Sagnac-Interferometers, gegenüber sehr geringen Drehraten behindert eine hochpräzise und zuverlässige Messung insbesondere bei sehr geringen Drehraten.

Der Erfindung liegt die Aufgabe zugrunde, ein Steuersystem für einen faseroptischen Kreisel anzugeben, bei dem der durch den Frequenzgang des Phasenmodulators verursachte Lock-In-Effekt wirksam eingedämmt wird und bei dem selbst bei kleinen Drehraten hochpräzise Drehratenmessungen durchführbar sind. Diese Aufgabe wird erfindungsgemäß durch den Gegenstand der unabhängigen Patentansprüche gelöst. Weiterbildungen sind in den jeweiligen Unteransprüchen angegeben.

Ein Steuersystem für einen faseroptischen Kreisel weist einen Phasenmodulator zum Modulieren einer Phase eines Lichtsignals und eine Steuereinheit zum Erzeugen eines Steuersignals auf, um dessen Größe die Phase moduliert wird und das dem Phasenmodulator zugeführt wird. Zudem weist das Steuersystem eine Integriereinheit zum Bestimmen eines Integralwerts eines Integrals über ein Eingangssignal auf. Hierbei nimmt das Steuersignal in Abhängigkeit von dem Integralwert einen ersten Wert oder einen zweiten Wert an.

Es hat sich gezeigt, dass sich durch die Verwendung eines Steuersignals für die Phasenmodulation in einem faseroptischen Kreisel, dessen Werte anhand eines Integralwertes eines Integrals über ein Eingangssignal bestimmt werden, der niederfrequente Anteil im Steuersignal reduzieren lässt. Steuersignale für kleine Drehraten weisen damit ein ähnliches Frequenzspektrum auf wie Steuersignale für große Drehraten. Durch die Verwendung solcher Steuersignale ist auch für kleine Drehraten gewährleistet, dass dem Phasenmodulator keine Steuersignale mit niederfrequenten Komponenten zur Steuerung der Phasenmodulation zugeführt werden. Damit gleicht sich das Antwortverhalten des Phasenmodulators bei kleinen Drehraten dem Antwortverhalten des Phasenmodulators bei großen Drehraten an, wodurch der Lock-In-Effekt reduziert wird und ein Bevorzugen des Messwerts "0°/h" bei kleinen Drehraten verschwindet.

Das Steuersignal kann den ersten Wert und den zweiten Wert derart annehmen, dass es mittelwertfrei ist. Durch die Mittelwertfreiheit wird der Lock-In-Effekts unterdrückt.

Die Steuereinheit erzeugt das erste Steuersignal aus dem Eingangssignal.

Dadurch wird gewährleistet, dass das Steuersignal aus einem bekannten Eingangssignal abgeleitet wird. Der erste Wert des Steuersignals entspricht dem Wert des Eingangssignals, während der zweite Wert des Steuersignals dem um einen festen Betrag verschobenen Wert des Eingangssignals entspricht. Das heißt, dass die durch den ersten Wert des Steuersignals herbeigeführte Phasenmodulation gleich der durch das Eingangssignal bewirkten Phasenmodulation ist, während die von dem zweiten Wert des Steuersignals bewirkte Phasenmodulation zusätzlich um den festen Betrag verschoben ist. Das statistische und mittelwertfreie Steuersignal wird damit aus einem zuvor bestimmten Eingangssignal bestimmt.

Das Phasenmodulationssignal kann zum Beispiel benutzt werden, um zu bestimmen, bei welcher Phase oder Phasendifferenz die Intensität des im faseroptischen Kreisel bestimmten Interferenzsignals gemessen werden soll, d.h. die Phasenmodulation bestimmt den Arbeitspunkt der Intensitätsmessung an der Interferometerkennlinie. Das Eingangssignal kann dann z.B. benutzt werden, um einen Arbeitspunkt festzulegen. Das Eingangssignal wird derart in das Steuersignal umgewandelt, dass der durch das Eingangssignal bestimmte Arbeitspunkt oder andere Arbeitspunkte ausgewählt werden, die äquivalente Messergebnisse liefern. Somit wird sichergestellt, dass trotz des zur Reduzierung des Lock-In-Effekts benutzten Steuersignals Messbedingungen für die Intensitätsmessung bestimmt werden können.

Dabei kann die Steuereinheit das Steuersignal mit dem ersten Wert dann aus dem Eingangssignal erzeugen, wenn der Integralwert kleiner oder gleich einem Schaltgrenzwert ist, und das Steuersignal mit dem zweiten Wert dann aus dem Eingangssignal erzeugen, wenn der Integralwert größer als der Schaltgrenzwert ist. Dadurch wird es ermöglicht, klare Bedingungen aufzustellen, unter denen der erste oder der zweite Wert verwendet werden soll. Wird das Integral über das Eingangssignal zu hoch, so schaltet die Steuereinheit von dem ersten Wert auf den zweiten Wert um. Durch die Wahl des Schaltgrenzwertes, bei dem dieses Umschalten ausgeführt wird, kann sichergestellt werden, dass niederfrequente Anteile im Phasenmodulationssignal beseitigt werden, wodurch der Lock-In-Effekt weiter reduziert werden kann.

Hierbei kann es sich bei der Integriereinheit um einen Delta-Sigma-Modulator handeln. Dadurch wird erreicht, dass der zeitliche Mittelwert eines Ausgabe-Bit-Stroms gleich dem Mittelwert von Eingangsdaten ist. Dies garantiert die Mittelwertfreiheit des Steuersignals.

Die Steuereinheit kann den Integralwert auch um einen vorgegebenen Betrag reduzieren. Dadurch wird gewährleistet, dass die Steuereinheit beeinflussen kann, ob dem Phasenmodulator der erste oder der zweite Wert des Steuersignals zugeführt wird, da die Steuereinheit den Integralwert reduzieren kann. Zum Beispiel kann die Steuereinheit den Integralwert bei Eintreten einer vorgegebenen Bedingung um einen festen oder einen zeitlich variablen Betrag reduzieren, wodurch sich auch eine Änderung des zur Phasenmodulation benutzten Steuersignals ergeben kann.

Zum Beispiel kann die Steuereinheit den Integralwert dann um einen vorgegebenen Betrag reduzieren, wenn der Integralwert einen Rücksetzgrenzwert überschreitet. Der Rücksetzgrenzwert kann dabei gleich dem Schaltgrenzwert sein, der zur Bestimmung dient, welcher Wert des Steuersignals verwendet werden soll. Die beiden Grenzwerte können aber auch verschieden voneinander sein.

Der zweite Wert des Steuersignals kann sich von dem ersten Wert des Steuersignals um den Betrag q, insbesondere um den Betrag $q=2\pi$, unterscheiden. Dadurch fluktuiert der Betrag der Phasenmodulation zwischen dem ersten Wert des Steuersignals und dem um den Betrag q verschobenen zweiten Wert. Für $q=2\pi$ springt ein Arbeitspunkt also in Abhängigkeit von dem Integralwert um eine vollständige Periode einer kosinus- oder sinusförmigen Funktion, deren Phase vom Phasenmodulator moduliert wird. Durch die Abhängigkeit von dem Integralwert wird gewährleistet, dass dem Phasenmodulator keine Steuersignale mit niedrigem Frequenzanteil zugeführt werden, wodurch die Drehratenbestimmung von kleinen Drehraten in einem faseroptischen Kreisel verbessert werden kann. Für einen Wert von q gleich $2\pi$ ist zudem gewährleistet, dass Arbeitspunkte mit gleicher Steigung ausgewählt werden.

Das Eingangssignal kann dabei eine Überlagerung eines Rechtecksignals und eines Rampensignals sein. Dadurch ist gewährleistet, dass durch die Sprünge zwischen verschiedenen Werten des Rechtecksignals große Phasenverschiebungen durch den Phasenmodulator erzeugt werden, die z.B. zum Verschieben von Arbeitspunkten genutzt werden könnten. Das Rampensignal ist dem Rechtecksignal überlagert und garantiert eine gleichbleibende Phasenverschiebung und damit das Halten eines Arbeitspunkts. Dies ist insbesondere dann der Fall, wenn es im Interferometer eine Phasendifferenz gibt. Gleichzeitig ist eine nur langsam ansteigende Rampe aber auch für niederfrequente Anteile im Modulationssignal und damit für den Lock-In-Effekt mitverantwortlich.

Aufgrund des Rampensignals ist aber auch gewährleistet, dass der Integralwert im Laufe der Zeit größer wird, so dass sich die Bedingungen für die Auswahl des ersten oder des zweiten Wertes des Steuersignals verändern. Dadurch kann der durch das Rampensignal verursachte Lock-In-Effekt weitgehend reduziert werden, da durch Springen zwischen dem ersten und dem zweiten Wert des Steuersignals niederfrequente Komponenten in Komponenten höherer Frequenz umgewandelt werden. Anders ausgedrückt werden dem Rampensignal durch Schalten von dem ersten Wert des Steuersignals zu dem zweiten Wert des Steuersignals zusätzliche, plötzliche Spannungsänderungen aufgeprägt, die zur Verschiebung der Frequenzkomponenten zu höheren Werten führen.

Das Steuersignal kann eine Wortbreite aufweisen, die um 1 Bit breiter ist als die Wortbreite des Eingangssignals, und sich nur in einem Zusatzbit von dem Eingangssignal unterscheiden. Zudem kann ein Wert des Zusatzbits bestimmen, ob das Steuersignal den ersten Wert oder den zweiten Wert annimmt. Dies erlaubt eine möglichst einfache Datenübertragungs- und Datenstruktur.

Zudem kann das Zusatzbit im Steuersignal mit dem ersten Wert den Wert 0 und im Steuersignal mit dem zweiten Wert den Wert 1 haben. Dadurch entspricht der erste Wert dem Wert des Eingangssignals und führt zu der gleichen Phasenmodulation, zu der auch das Eingangssignal geführt hätte. Der Wert 1 des Zusatzbits kann anzeigen, dass der Integralwert den Schaltgrenzwert überschritten hat und kann dazu dienen, eine Phasenmodulation gemäß des um den Wert q reduzierten Eingangssignals herbeizuführen. Dadurch entspricht der zweite Wert des Steuersignals dem um den Betrag q reduzierten Wert des Eingangssignals. Durch dieses vom Integralwert abhängige Springen zwischen dem dem Eingangssignal entsprechenden ersten Wert des Steuersignals und dem um den Betrag q reduzierten zweiten Wert des Steuersignals wird der niederfrequente Anteil der Phasenmodulationssignale und damit der Lock-In-Effekt verringert bzw. beseitigt.

Der Phasenmodulator kann einen Integrierten Optischen Multifunktions-Chip (multifunctional integrated optical chip, MIOC) aufweisen, der das Steuersignal empfängt. In einem solchen, bekannten MIOC wird die Phase von durchlaufendem Licht mithilfe von Elektroden moduliert. Dabei kann durch ein mit Hilfe der Elektroden appliziertes elektrisches Feld der effektive Index bzw. die Fähigkeit zum Leiten von Licht beeinflusst werden. Dadurch wird es ermöglicht, die Phase von durchlaufendem Licht auf besonders einfache Weise zu modulieren.

Ein faseroptischer Kreisel kann das oben beschriebene Steuersystem aufweisen. Zudem kann der faseroptische Kreisel eine Lichtquelle zum Emittieren von Licht mit einer bestimmten Wellenlänge und einen Strahlteiler zum Teilen des Lichts aus der Lichtquelle in zwei einlaufende Strahlen, die in den Phasenmodulator geleitet werden, und zum Überlagern von zwei aus dem Phasenmodulator austretenden auslaufenden Strahlen zu einem Detektionsstrahl aufweisen. Des Weiteren kann der faseroptische Kreisel eine Spule zum gegenläufigen Umlaufen der in dem Phasenmodulator empfangenen einlaufenden Strahlen, bevor sie als zwei auslaufende Strahlen dem Phasenmodulator wieder zugeführt werden, und einen Detektor zum Messen einer Intensität des Detektionsstrahls aufweisen, die an die Steuereinheit weitergegeben wird. Dabei bestimmt die Steuereinheit aus der gemessenen Intensität eine Drehrate um eine Zentralachse der Spule und das Steuersignal.

In dem faseroptischen Kreisel erzeugt also eine Lichtquelle einen Lichtstrahl, d.h. ein Lichtsignal, mit einer bestimmten Wellenlänge, z.B. einen Laserstrahl mit vorgegebener Wellenlänge. Dieser wird in einen Lichtleiter eingekoppelt und einem Strahlteiler zugeführt, der ihn in zwei Strahlen teilt, die in den Phasenmodulator einlaufen. Dabei kann es sich wie oben erläutert um einen MIOC handeln. Der Strahlteiler kann dabei auch direkt in dem MIOC integriert sein, z.B. derart, dass der MIOC einen Y-förmigen Lichtweg aufweist, d.h. zwei Ein-/Ausgänge auf der einen Seite und einen Aus-/Eingang auf der anderen Seite.

Im Phasenmodulator wird die Phase der beiden Strahlen relativ zueinander um einen durch den jeweiligen Wert des Steuersignals bestimmten Wert verschoben, bevor die Strahlen in die Spule eingekoppelt werden. Die Spule ist dabei derart ausgebildet, dass sie aus mindestens einem in einer Ebene aufgewickelten Lichtleiter besteht. In diesen Lichtleiter werden die Strahlen derart eingekoppelt, dass die beiden Strahlen gegenläufig in der Spule umlaufen, d.h. läuft ein Strahl z.B. gegen den Uhrzeigersinn, läuft der andere im Uhrzeigersinn.

Wird die Spule während des Durchlaufens der Strahlen um eine senkrecht auf die Ebene der Wicklungen stehende Zentralachse rotiert, so ändert sich der effektive Laufweg der Lichtstrahlen bis zum Austritt. Der Laufweg von gegen die Rotationsrichtung laufenden Strahlen wird verkürzt, während der Laufweg von mit der Rotationsrichtung laufenden Strahlen verlängert wird. Lichtstrahlen, die beim Eintritt in die Spule gleiche Phase hatten, haben beim Austritt aus der Spule eine gegenseitige Phasendifferenz, die proportional zur Drehrate ist (Sagnac-Effekt). Diese Phasendifferenz lässt sich bei Überlagerung der Lichtstrahlen aus dem entstehenden Interferenzmuster ableiten. Im vorliegenden Fall verändert sich die durch den Phasenmodulator erzeugte Phasendifferenz der einlaufenden Strahlen also noch zusätzlich um die aus dem Sagnac-Effekt resultierende Phasendifferenz.

Um ein auslesbares Interferenzmuster zu erzeugen, werden die auslaufenden Strahlen zurück in den Phasenmodulator und den Strahlteiler gekoppelt, der die Strahlen überlagert. Im Phasenmodulator wird den Strahlen zudem eine weitere Phasenverschiebung in Abhängigkeit von dem jeweiligen Steuersignal aufmoduliert. Aufgrund der Reziprozität des Aufbaus, würde bei gleich bleibendem Steuersignal die Phasenverschiebung zwischen den entgegengesetzt umlaufenden Strahlen nach einer Umlaufzeit wieder verschwinden.

Die Phasenmodulation wird generiert, um für die Ausmessung des Interferenzsignals bestimmte Arbeitspunkte auszuwählen. Um ein bestmögliches Bestimmen der Drehrate zu ermöglichen, werden die Arbeitspunkte z.B. derart ausgewählt, dass sie Punkte maximaler Steigung der Interferometerkennlinie sind und Punkte positiver und negativer Steigung abwechselnd ausgewählt werden. Um Autokorrelationen in der Ausleseschaltung des faseroptischen Kreisels zu vermeiden, darf der Wechsel zwischen den Arbeitspunkten nicht periodisch erfolgen und es müssen mindestens 4 Arbeitspunkte verwendet werden.

Da sich bei gleich bleibendem Steuersignal die Phasenverschiebungen beim Ein- und Auslaufen der Lichtstrahlen in bzw. aus der Spule aufheben, kann das Steuersignal zeitlich derart verändert werden, dass sich gerade die erwünschten Arbeitspunkte ergeben.

Das entsprechend modulierte, aus den überlagerten Strahlen bestehende Interferenzsignal wird wiederum über Lichtleiter in den Detektor eingekoppelt, wo dessen Intensität an den durch die Phasenmodulation bestimmten Arbeitspunkten gemessen wird. Aus diesen Intensitätsmessungen werden dann in der Steuereinheit die anliegende Drehrate und die zur Steuerung der Phasenmodulation notwendigen Steuersignale bestimmt. Phasenmodulator, Detektor und Steuereinheit bilden also einen geschlossenen Regelkreis.

Durch die oben beschriebene Anordnung ist es also möglich, einen faseroptischen Kreisel bereitzustellen, der aufgrund der Steuerung durch ein Steuersignal keinen Lock-In-Effekt bei Drehraten nahe Null aufweist, der durch den Frequenzgang eines Phasenmodulators verursacht wird.

Der faseroptische Kreisel kann dabei wie oben erläutert mittels des Phasenmodulationssignals die Phasen der zwei einlaufenden Strahlen und die Phasen der zwei auslaufenden Strahlen derart modulieren, dass die Intensität des Detektionsstrahls an vorbestimmten Arbeitspunkten messbar ist. Dadurch ist gewährleistet, dass optimale Messbedingungen vorliegen, wodurch die Präzision des faseroptischen Kreisels erhöht wird.

Die Arbeitspunkte können dabei aufeinanderfolgende Punkte maximaler Steigung der gegen Phase aufgetragenen Intensität des Detektionsstrahls sein und es können 8 Arbeitspunkte benutzt werden. Wie oben bereits erläutert, wird durch die Auswahl von wenigstens vier Arbeitspunkten (Auslesebereich bzw. Hub des Modulationssignals von $2\pi$) die Gefahr von Autokorrelationen in der Auswertschaltung des faseroptischen Kreisels reduziert. Die Wahl von 8 Arbeitspunkten, d.h. eines Auslesebereichs bzw. Hub des Modulationssignals von $4\pi$ führt zu einer größeren Freiheit bei der Festlegung von Parametern im Regelkreis des faseroptischen Kreisels. Dadurch ist es möglich, sämtliche Bedingungen an die Arbeitspunkte für einen hochpräzisen Betrieb des faseroptischen Kreisels auch bei kleinen Drehraten zu erfüllen.

Der faseroptische Kreisel kann ein faseroptisches Sagnac-Interferometer sein. Dadurch werden die oben erläuterten Vorteil auch für Messungen mit einem faseroptischen Sagnac-Interferometer zugänglich.

Ein Verfahren zur Phasenmodulation eines Phasenmodulators eines faseroptischen Kreisels umfasst die folgenden Schritte: Erzeugen eines Steuersignals, um dessen Größe die Phase moduliert wird; Bestimmen eines Integralwerts eines Integrals über ein Eingangssignal; Zuführen des ersten Steuersignals zu dem Phasenmodulator. Hierbei nimmt das Steuersignal in Abhängigkeit von dem Integralwert einen ersten Wert oder einen zweiten Wert an. Dadurch kann ein Phasenmodulator derart angesteuert werden, dass ein Lock-In-Effekt reduziert wird.

Diese und weitere Vorteile der Erfindung werden nachfolgend anhand von Beispielen unter Zuhilfenahme der begleitenden Figuren erläutert. Es zeigt:

**Fig. 1A** ein schematisches Blockschaltbild eines Steuersystems gemäß einer Ausführungsform;

**Fig. 1B** ein schematische Blockschaltbild eines Steuersystems gemäß einer weiteren Ausführungsform;

**Fig. 2** ein schematisches Blockschaltbild der Datenübertragung in einem Steuersystem gemäß einer Ausführungsform;

**Fig. 3** ein schematisches Blockschaltbild eines faseroptischen Kreisels gemäß einer Ausführungsform;

**Fig. 4** ein schematisches Blockschaltbild einer digitalen Auswerteschaltung gemäß dem Stand der Technik;

**Fig. 5** ein schematisches Blockschaltbild der Datenübertragung in einem Steuersystems gemäß einer Ausführungsform;

**Fig. 6A bis 6C** Ergebnisse von Drehratenmessungen unter Verwendung eines Steuersystems aus dem Stand der Technik und von Steuersystemen gemäß der Ausführungsform von Fig. 5; und

**Fig. 7** ein schematisches Flussdiagramm eines Verfahrens gemäß einer Ausführungsform.

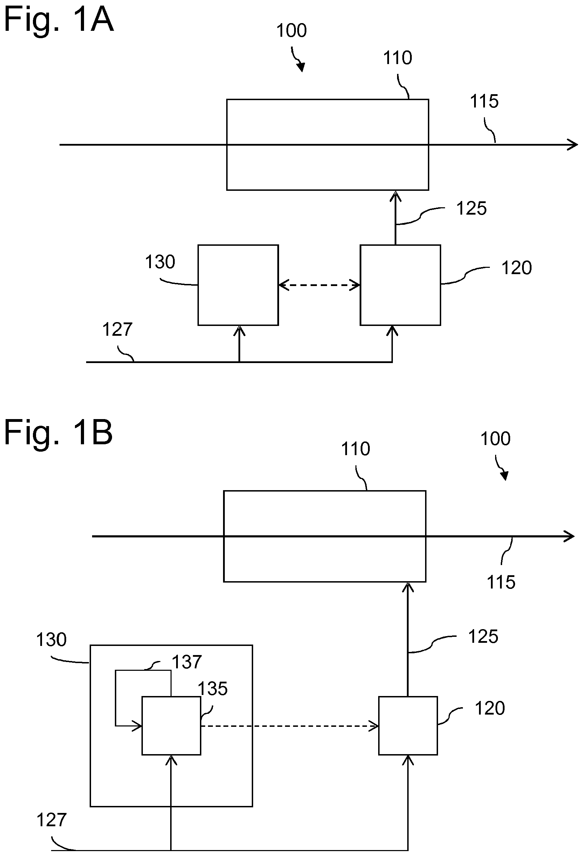

Fig. 1A zeigt ein Steuersystem 100, das zur Steuerung eines faseroptischen Kreisels geeignet ist. Das Steuersystem 100 weist einen Phasenmodulator 110, eine Steuereinheit 120 und eine Integriereinheit 130 auf.

Der Phasenmodulator 110 ist dazu geeignet, die Phase eines Signals 115, das ihn durchläuft zu verändern. Mit dem Phasenmodulator 110 ist es zum Beispiel möglich, die Phase eines durchlaufenden Lichtstrahls um einen bestimmten Betrag zu verschieben. Der Phasenmodulator 110 kann zum Beispiel einen Integrierten Optischen Multifunktions-Chip (MIOC) aufweisen. In dem MIOC wird die Phase von durchlaufendem Licht mithilfe von Elektroden moduliert. Dabei kann durch ein mit Hilfe der Elektroden appliziertes elektrisches Feld der effektive Index bzw. die Fähigkeit zum Leiten von Licht beeinflusst werden. Dadurch wird es ermöglicht, die Phase von durchlaufendem Licht auf besonders einfache Weise zu modulieren bzw. zu verschieben.

Von der Steuereinheit 120 wird dem Phasenmodulator 110 ein Steuersignal 125 zugeführt, durch das die Phasenmodulation gesteuert wird. Die Steuereinheit 120 kann neben der Bereitstellung des Steuersignals 125 noch weitere Aufgaben übernehmen. Zum Beispiel kann die Steuereinheit 120 ein Computerprozessor, etwa eine CPU, sein, der sämtliche oder einen Teil der Prozesse in einem System oder einer Vorrichtung, wie etwa einem faseroptischen Kreisel, in dem das Steuersystem 100 zum Einsatz kommt, kontrolliert.

Die Stärke der Phasenmodulation wird durch die Größe des Steuersignals 125 bestimmt. Zum Beispiel kann im MIOC das Steuersignal die an die Elektroden anzulegende Spannung sein und die Phasenverschiebung zum Spannungswert direkt proportional sein. Die Proportionalitätskonstante bildet der elektrooptische Verstärkungsfaktor der verwendeten Modulationsstruktur. Dieser kann für die verwendeten Modulationsstrukturen bestimmt werden. Skaliert man ein Steuersignal 125 mit dem Inversen des elektrooptischen Verstärkungsfaktors, ist die Größe des resultierenden Steuersignals 125 also gleich der Phasenverschiebung, d.h. der Wert des Steuersignals 125 gibt direkt die Phasenverschiebung an. Die Kompensation des elektrooptischen Verstärkungsfaktors kann zum Beispiel bei einer in der Steuereinheit 120 durchgeführten digital-analog (DA) Wandlung erfolgen.

Das Steuersignal 125, das dem Phasenmodulator 110 zugeführt wird, kann die Steuereinheit 120 basierend auf einem Eingangssignal 127 erzeugen. Das Eingangssignal 127 ist selbst dazu geeignet, den Phasenmodulator 110 zu steuern, kann aber in der Steuereinheit 120 zu dem Steuersignal 125 weiter verarbeitet werden.

Das Eingangssignal wird nicht nur der Steuereinheit 120, sondern auch der Integriereinheit 130 zugeführt. Die Integriereinheit 130 bildet das zeitliche Integral über das Eingangssignal und bestimmt damit einen Integralwert. Der Integralwert wird von der Integriereinheit 130 an die Steuereinheit 120 übermittelt und ist ein Maß für das zeitliche Anwachsen des Eingangssignals 127.

Basierend auf dem Integralwert bestimmt die Steuereinheit 120 den Wert des Steuersignals derart, dass das Steuersignal 125 einen ersten Wert oder einen zweiten Wert annimmt. Hierdurch kann das Steuersignal 125 mittelwertfrei werden. Der Integralwert und damit der zeitliche Verlauf des Eingangssignals ist also ausschlaggebend dafür, ob das Steuersignal 125 mit dem ersten Wert oder mit dem zweiten Wert verwendet werden soll. Der zeitliche Verlauf des Eingangssignals 127 bestimmt also die Häufigkeit von Sprüngen zwischen den Werten des Steuersignals 125. Aus diesen Eigenschaften des Steuersignals 125 ergibt sich, dass in dem Frequenzspektrum des Steuersignals 125, das im Zeitverlauf Kombinationen des ersten Werts und des zweiten Werts annimmt, Frequenzen nahe null stark unterdrückt sind. Dadurch wird es möglich, mit dem Steuersignal 125 Phasenmodulatoren, wie etwa MIOCs, zu betreiben, deren Antwortverhalten bei kleinen Frequenzen sich von ihrem Antwortverhalten bei großen Frequenzen unterscheidet. Zum Beispiel kann eine geringere elektrooptische Verstärkung im MIOC bei kleinen Frequenzen dadurch unmerklich gemacht werden, dass in Abhängigkeit von dem Integralwert der erste oder der zweite Wert des Steuersignals 125 verwendet wird. Dadurch weist das Signal, das zur Steuerung des Phasenmodulators 110 benutzt wird, keine oder nur stark unterdrückte Frequenzkomponenten in dem vom MIOC schwächer verstärkten Frequenzbereich auf. Dies erlaubt es, einen Phasenmodulator mit einem bei kleinen und großen Frequenzen unterschiedlichen Antwortverhalten stabil und verlässlich zu betreiben.

Dem Phasenmodulator 110 kann zum Beispiel dann das Steuersignal 125 mit dem zweiten Wert zugeführt werden, wenn der Integralwert über einem bestimmten Schaltgrenzwert liegt. Dann hängt also das Umschalten zwischen dem ersten und dem zweiten Wert des Steuersignals 125 davon ab, wie das Integral über das Eingangssignal 127 verläuft. Bei rasch und monoton ansteigendem Eingangssignal 127 wird der Integralwert rasch den Schaltgrenzwert erreichen und somit rasch von dem ersten Wert des Steuersignals 125 auf den zweiten Wert gewechselt werden.

Der Integralwert kann hierbei auch von der Steuereinheit 120 um einen bestimmten Betrag reduziert werden. Dies kann dann der Fall sein, wenn der Integralwert einen vorgegebenen Rücksetzgrenzwert überschreitet. Je nach Zusammenspiel von Rücksetzgrenzwert und dem Schaltgrenzwert kann damit eingestellt werden, mit welcher Häufigkeit der zweite Wert des Steuersignals 125 verwendet werden soll. Üblicher Weise sind Rücksetzgrenzwert und Schaltgrenzwert gleich. Ist dies der Fall, so wird der zweite Wert des Steuersignals 125 in nur einem Zeitschritt verwendet, in dem der Integralwert oberhalb der beiden Grenzwerte liegt. Durch die Reduktion des Integralwerts wird bereits im nächsten Zeitschritt wieder der erste Wert des Steuersignals 125 benutzt. Durch den dadurch herbeigeführten Wechsel von dem ersten Wert zu dem zweiten Wert und zurück zu dem ersten Wert des Steuersignals 125 können niederfrequente Anteile des gesamten Steuersignals 125 und damit der Lock-In-Effekt reduziert werden.

Das Steuersignal 125 kann aus dem Eingangssignal 127 erzeugt werden. Zum Beispiel kann der erste Wert des Steuersignals 125 einem Wert des Eingangssignals 127 dahingehend entsprechen, dass die durch das Steuersignal 125 mit dem ersten Wert hervorgerufene Phasenmodulation bzw. Phasenverschiebung gleich der ist, die aus dem Eingangssignal 127 resultieren würde. Gleichzeitig kann die Phasenmodulation aufgrund des Steuersignals 125 mit dem zweiten Wert eine zusätzliche Phasenverschiebung hervorrufen. Zum Beispiel kann der zweite Wert des Steuersignals 125 gegenüber dem ersten Wert des Steuersignals und der Phasenverschiebung aufgrund des Eingangssignals 127 um den Betrag q verschoben (d.h. erhöht oder reduziert) sein. Dabei kann gelten $q=2\pi$, d.h. das Steuersignal 125 mit dem zweiten Wert bringt eine zusätzliche Modulation um eine ganze Periode mit sich.

Durch derartige Verschiebungen der Phasenlage, und damit von Arbeitspunkten, werden niederfrequente Anteile im Eingangssignal 127 beseitigt. Das Springen zwischen verschiedenen Arbeitspunkten wirkt wie eine Umwandlung von niederfrequenten Komponenten des Frequenzspektrums in Komponenten höherer Frequenz. Somit wird das Frequenzspektrum des zur Steuerung des Phasenmodulators benutzten Signals zu höheren Frequenzen hin verschoben, wodurch der Lock-In-Effekt verringert wird.

Das Eingangssignal 127 kann zum Beispiel eine Überlagerung aus einem Rechtecksignal mit mindestens vier temporär festen Signalwerten und einem Rampensignal sein. Dabei werden die temporär festen Signalwerte des Rechtecksignals verwendet, um in dem Phasenmodulator 110 durch Springen zwischen verschiedenen Signalwerten eine plötzliche, diskontinuierliche Phasenverschiebung zu erzeugen. Die zeitliche Länge, während derer die jeweiligen Signalwerte anliegen, und die Reihenfolge der verschiedenen Signalwerte können dabei sowohl vorgegeben als auch statistisch verteilt sein. Das Rampensignal wird dagegen verwendet, um kontinuierlich wachsende Phasenverschiebungen zu erzeugen oder um eine von außen auf das Signal 115 wirkende Phasenverschiebung zu kompensieren. Insbesondere kann das Rampensignal benutzt werden, um eine konstante Phasenverschiebung, die z.B. aufgrund des Sagnac-Effekt zwischen den entgegengesetzt laufenden Lichtstrahlen auftritt, zu kompensieren. Aufgrund der differenzierenden Wirkung des Interferometers, die durch den resziproken Lichtweg in der Spule erzeugt wird, auf das Modulationssignal, ist das Rampensignal dazu geeignet, konstante Phasenverschiebungen zu kompensieren.

Da das Rampensignal relativ langsam steigt, basiert auf ihm ein Großteil des niederfrequenten Spektrums des Eingangssignals 127. Gleichzeitig sorgt das Rampensignal für ein Anwachsen des Integralwerts. Wird der Integralwert größer als der Schaltgrenzwert, wird ein zusätzlicher Sprung um den Betrag q durchgeführt und dadurch das Frequenzspektrum des Eingangssignals 127 zu höheren Werten hin verschoben.

Beispielhaft zeigt Fig. 1B ein schematisches Blockdiagramm des Steuersystems 100, in dem die Integriereinheit 130 ein Register 135 und einen Addierer 137 aufweist. Das Eingangssignal 127 wird in einem ersten Zeitschritt in das Register 135 eingelesen. In diesem ersten Zeitschritt ist der Integralwert gleich dem Wert des Eingangssignals 127. Im nächsten Zeitschritt wird der im Register 135 gespeicherte Wert dem neu empfangenen Eingangssignal 127 durch den Addierer 137 hinzuaddiert und dieser Wert im Register 135 gespeichert. Der neu gespeicherte Wert wird der Steuereinheit 120 mitgeteilt. Durch zeitliche Iteration dieser Schritte kann das Integral über das Eingangssignal 127 gebildet werden, auf dem die Auswahl des ersten oder zweiten Werts des Steuersignals 125 basiert.

Das Steuersystem 100 ist geeignet, in einem faseroptischen Kreisel eingesetzt zu werden. In einem faseroptischen Kreisel wird die Phasenmodulation verwendet, um die zur Drehratenbestimmung notwendige Messung an bestimmten Arbeitspunkten einer Interferometerkennlinie, die die Interferenz zweier im faseroptischen Kreisel überlagerten Lichtstrahlen angibt, ausführen zu können.

Bezüglich der Auswahl der Abfolge dieser Arbeitspunkte bestehen gewisse Freiheitsgrade, die sinnvoll ausgenützt werden müssen. Das Ansteuern der Arbeitspunkte durch den Phasenmodulator verfolgt dabei die folgenden Ziele:

1. Ohne Modulation würden Scheitelpunkte der kosinusförmigen Inferometerkennlinie angesteuert, die die Steigung Null haben. Somit wäre die Empfindlichkeit des faseroptischen Kreisels gleich Null, und es wäre keine Richtungsinformation vorhanden. Um diese Nachteile zu vermeiden, werden Punkte größter Steigung angesteuert.

2. Würden nur Punkte mit Steigungen gleichen Vorzeichens angesteuert, so würde eine anliegende Drehrate zu einem Gleichspannungssignal führen, das durch nachfolgendes Verstärken unterdrückt würde. Daher werden Arbeitspunkte mit wechselndem Vorzeichen angesteuert. Dadurch entsteht ein Auslesesignal, das im Durchlassbereich der nachfolgenden Verstärkerstufen liegt.

3. Würden die Arbeitspunkte so angesteuert, dass positive und negative Steigungen periodisch abwechseln, würde eine Korrelation zwischen Steuersignalen und weiteren zum Betrieb des faseroptischen Kreisels notwendigen Signalen entstehen, was zu Unempfindlichkeitsbereichen bei kleinen Drehraten führen würde. Somit muss die Abfolge der Vorzeichen der Steigungen der Arbeitspunkte (Modulation) so erfolgen, dass diese Korrelation Null wird.

4. Die Modulation muss so beschaffen sein, dass der elektrooptische Verstärkungsfaktor wie oben beschrieben bei beliebigen Eingangsdrehraten des Sensors kompensiert werden kann.

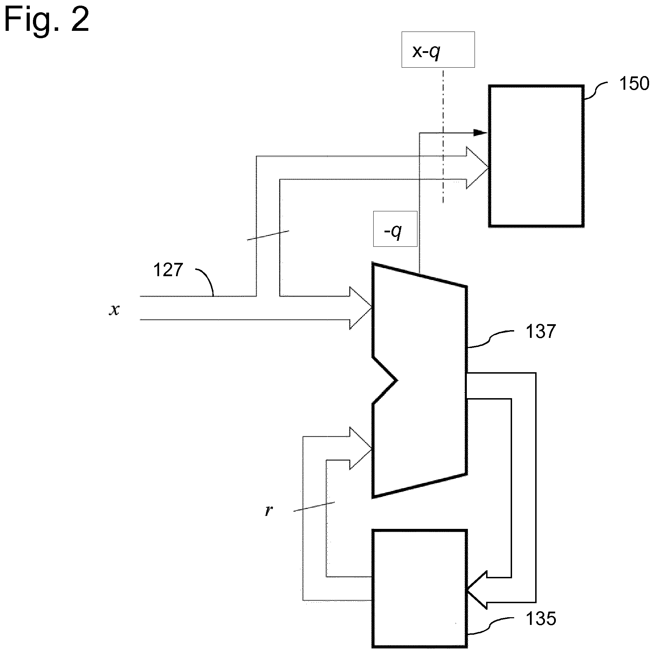

Fig. 2 zeigt eine schaltungstechnische Realisierung der Erzeugung des Steuersignal 125, das den ersten Wert und den zweiten Wert annimmt, mit der diese Bedingungen erfüllt werden können und die zudem den Lock-In-Effekt reduziert. Das Eingangssignal 127 kann zeitabhängig und aus dem Wertebereich $x(t) \in [0,q]$ sein. Es kann z.B. eine Wortbreite von 12 Bit aufweisen, wobei die Gewichtung des "most significant bit" (MSB) $q/2$ ist.

Wie oben beschrieben, wird das Eingangssignal in einem ersten Zeitschritt in das Register 135 gespeichert und in Zusammenwirkung mit dem Addierer 137 zeitlich integriert. Der in jedem Zeitschritt addierte vorherige Registerwert, d.h. der Integralwert des vorherigen Zeitschritts, ist in der Fig. 2 mit r bezeichnet und hat die gleiche Wortbreite wie das Eingangssignal 127.

Abhängig vom aktuellen Integralwert $(x+r)$ wird bestimmt, ob der erste Wert des Steuersignals 125 oder der zweite Wert des Steuersignals 125 zur Phasenmodulation verwendet werden soll. Überschreitet der aktuelle Integralwert $(x+r)$ den Schaltgrenzwert, z.B. den zulässigen Wertebereich q, wird dies durch das Auftreten eines Zusatzbits signalisiert. Der aktuelle Integralwert selbst muss nicht verwendet werden. Ergänzt man die 12 Bit des Eingangssignals 127 mit dem Betrag x durch diesen Übertrag als neues MSB und interpretiert die so gewonnene 13-Bit-Zahl als Zweierkomplementzahl, so erhält man als Steuersignal 125 mit dem ersten Wert das Eingangssignal (12bit) mit nicht gesetztem Zusatzbit und als Steuersignal 125 mit dem zweiten Wert das um den Betrag "-q" verschobene Eingangssignal 127, da das gesetzte Zusatzbit, das den Übertrag über den Schaltgrenzwert angibt, als neues MSB die Gewichtung -q hat. Dies ist in Fig. 2 schematisch durch den mit "-q" gekennzeichneten Pfeil angedeutet, der angeben soll, dass durch das Zusatzbit eine Verschiebung der Phasenmodulation von x auf $(x-q)$ erreicht wird.

Gleichzeitig erfolgt eine Reduktion des Registereintrags von $(x+r)$ auf $(x+r-q)$. Diese wird automatisch ausgeführt, da der Wertebereich für x, und damit auch für das Register 135, auf das Intervall $[0,q]$ begrenzt ist. Werte die größer als q sind werden deshalb "modulo q", d.h. um Vielfache von q reduziert, gewertet. Durch diese Verarbeitung des Eingangssignals 127 wird das Steuersignal 125 mittelwertfrei. Die in Fig. 2 dargestellte Schaltung kann z.B. durch einen Delta-Sigma-Modulator realisiert werden.

Das Eingangssignal 127 kann auch eine andere Wortbreite aufweisen. Dann wird das Eingangssignal 127 wiederum um den Übertrag als MSB zum Steuersignal 125 ergänzt, das deshalb ein Bit mehr aufweist als das Eingangssignal 127.

Je nachdem, ob bei der Integration des Eingangssignals 127 mit Wert x ein Übertrag aufgetreten ist, wird das Steuersignal 125 mit dem ersten Wert x bzw. das Steuersignal 125 mit dem zweiten Wert $(x-q)$ einem DA-Wandler 150 zugeführt, der seinerseits den Phasenmodulator 110 ansteuert. Hierbei kann der Betrag von $q=2\pi$ sein. Aus dem Wertebereich $x \in [0,q]$ und der möglichen Verschiebung auf "-q" (für x=0) ergibt sich ein Aussteuerbereich des Phasenmodulators 110 von $4\pi$ (im Folgenden als $4\pi$-Modulation bezeichnet).

Dadurch wird es möglich niederfrequente Komponenten des Eingangssignals 127 durch Verwenden des Zusatzbits vor dem Eingang in den Phasenmodulator 110 zu eliminieren, wodurch der Lock-In-Effekt reduziert wird.

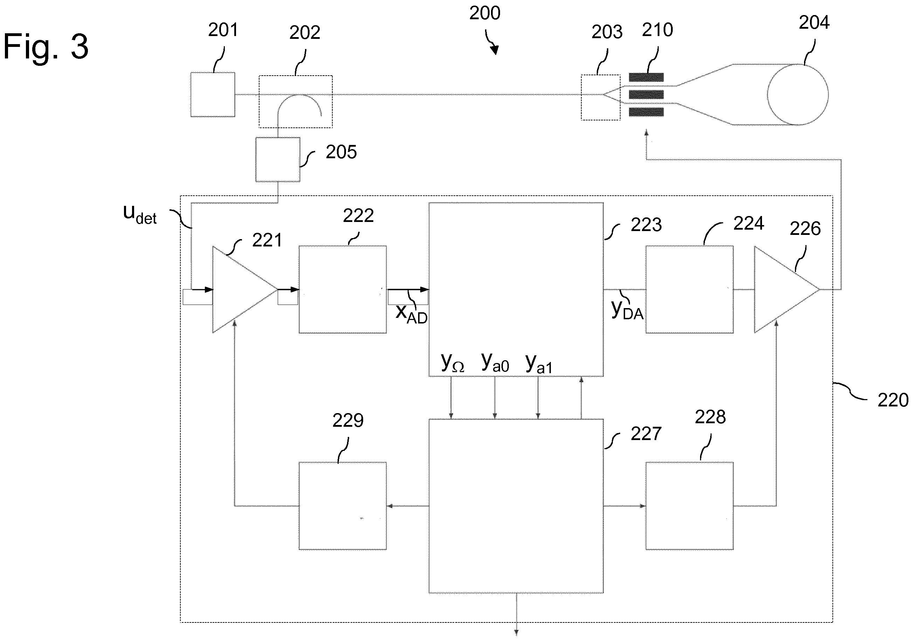

Gemäß einer weiteren Ausführungsform wird das oben beschriebene Steuersystem 100 in einem faseroptischen Kreisel zur Drehratenbestimmung, z.B. in einem Sagnac-Interferometer eingesetzt. Fig. 3 zeigt einen solchen faseroptischen Kreisel 200.

Der Aufbau des faseroptischen Kreisels 200 in Fig. 3 entspricht der üblicherweise verwendeten Anordnung. Eine Lichtquelle 201 sendet Licht der Wellenlänge $\lambda$ und der Frequenz $\omega = 2\pi c/\lambda$ aus, wobei c die Lichtgeschwindigkeit ist.

Die Lichtwellen durchlaufen einen Koppler 202 und werden dann in einem Strahlteiler 203 in zwei Teilstrahlen aufgeteilt. Beide Teilstrahlen durchlaufen einen Phasenmodulator 210, der ihnen eine zusätzliche Phasenmodulation aufprägt. Dadurch entsteht zwischen den beiden Strahlen eine Phasenverschiebung $-\varphi(t) = -c_1 \cdot u_\varphi(t)$. Dabei ist $u_\varphi$ eine Steuerspannung des Phasenmodulators 210 und $c_1$ sein elektrooptischer Verstärkungsfaktor. Das negative Vorzeichen für die resultierende Phasendifferenz ist willkürlich gewählt worden.

Daraufhin durchlaufen beide Strahlen in entgegengesetzter Richtung eine mit der Winkelgeschwindigkeit $\Omega$ gegen den Inertialraum rotierende, zu einer Spule 204 mit dem Radius R aufgewickelte Faser mit der Gesamtlänge $L_0$. Aufgrund des Sagnac-Effekts wird eine weitere Phasenverschiebung $\varphi_s = \Omega \cdot S$, mit $S = 4\pi R L_0/(\lambda c)$ zwischen den beiden Strahlen wirksam. Die Laufzeit des Lichts durch die Faserspule sei $T_0$. Nachdem beide Strahlen die Spule 204 passiert haben, besteht zwischen ihnen die Phasenverschiebung $\Omega(t) \cdot S - \varphi(t-T_0)$. Beide Strahlen durchlaufen nun wieder den Phasenmodulator 210, diesmal aber mit vertauschter Funktion, sodass als weitere Komponente die Phase $\varphi(t)$ mit positivem Vorzeichen hinzuaddiert wird. Die beiden aus dem Phasenmodulator 210 auslaufenden Strahlen werden im Strahlteiler 203 demnach mit der Gesamtphasenverschiebung $\Omega \cdot S + \varphi(t) - \varphi(t-T_0)$ zur Interferenz gebracht.

Nach der Vereinigung läuft die Lichtwelle als Detektionsstrahl wieder zurück zum Koppler 202, wo ein Teil des Detektionsstrahls zum Detektor 205 geleitet wird. Dort wird eine von der Phasenverschiebung der interferierenden Lichtstrahlen abhängige Ausgangsspannung $u_{det} = c_0 \cos(\Omega \cdot S + \varphi(t) - \varphi(t-T_0))$ erzeugt (in der Formel reduziert dargestellt um den durch einen Hochpassfilter eliminierten Gleichspannungsanteil aus der Interferometerkurve. Die Konstante $c_0$ hängt von der mittleren Lichtleistung am Empfänger, von dessen Empfindlichkeit und der Verstärkung nachfolgender Stufen ab.

Der verbleibende Schaltungsteil in Fig. 3 dient als Steuereinheit 220 und hat den Zweck, durch Einspeisen geeigneter Signale in den Phasenmodulator 210 das Sagnac-Interferometer 200 in einen Zustand zu bringen, der eine Auswertung des Detektorsignals $u_{det}$ zum Zwecke der Bestimmung der Drehrate $\Omega$ gestattet.

Das vom Detektor 205 erzeugte Signal $u_{det}$ wird einer ersten Verstärkerstufe 221 mit der einstellbaren Verstärkung $a_0$ zugeführt. Dadurch wird das Signal auf einen definierten Pegel $a_0 u_{det}$ gebracht und anschließend durch einen AD-Wandler 222 digitalisiert. Das gewonnene Signal $x_{AD}$ wird einer digitalen Auswerteschaltung 223 zugeführt, die ihrerseits ein Signal $y_{DA}$ erzeugt. Dieses dem Eingangssignal 127 entsprechende Signal wird durch einen DA-Wandler 224 in eine analoge Spannung übersetzt, und nach Multiplikation mit einem einstellbaren Verstärkungsfaktor $a_1$ an einer zweiten Verstärkungsstufe 226 dem Phasenmodulator 210 zugeführt. Zur Verstärkungseinstellung wird zweckmäßigerweise ein multiplizierender DA-Wandler vorgesehen, wobei dessen Referenzspannung zur Beeinflussung der Verstärkung verwendet wird. Typischerweise wird durch den DA-Wandler 224 und die zweite Verstärkerstufe 226 der elektrooptische Verstärkungsfaktor $c_1$ kompensiert, d.h. durch die zweite Verstärkerstufe 226 wird das Modulationssignal an den elektrooptischen Verstärkungsfaktor $c_1$ angepasst.

Die digitale Auswerteschaltung 223 und die DA- und AD-Wandler 222, 224 arbeiten mit der Taktzeit $T_0$, der Durchlaufzeit des Lichts durch die Spule 204. Es liegt also ein geschlossener Signalpfad vor. Die digitale Auswerteschaltung 223 liefert zu bestimmten, wählbaren Zeitpunkten Ausgabegrößen $y_\Omega$ für die Drehrate, $y_{a0}$ für den Verstärkungsfaktor $a_0$ des Eingangszweigs und $y_{a1}$ für den Verstärkungsfaktor $a_1$ des Ausgabezweigs. Alle diese Größen sind gemittelte Werte, die zur Weiterverarbeitung einem Prozessor 227 zur Verfügung gestellt werden. Zudem wird die digitale Auswerteschaltung 223 vom Prozessor 227 oder einem Zeitgeber nach jedem Auslesen der gemittelten Ausgabewerte mit einem "clear"-Befehl bedient, der zur Rücksetzung der internen Mittelwertbilder dient.

Der Prozessor 227 berechnet aus den vorgemittelten Größen $y_\Omega$, $y_{a0}$ und $y_{a1}$ nach eventueller weiterer Filterung die Messgröße $\Omega$ und die zum Einstellen der Verstärkungsfaktoren $a_0$ und $a_1$ notwendigen Digitalsignale, die über einen ersten Hilfs-DA-Wandler 228 und einen zweiten Hilfs-DA-Wandler 229 die entsprechenden ersten und zweiten Verstärkerstufen 222, 224 beeinflussen. Die Verstärkungsfaktoren $a_0$ und $a_1$ können auch rein digital angepasst werden, z.B. durch dafür geeignete Multiplizierer in der Auswerteschaltung 223.

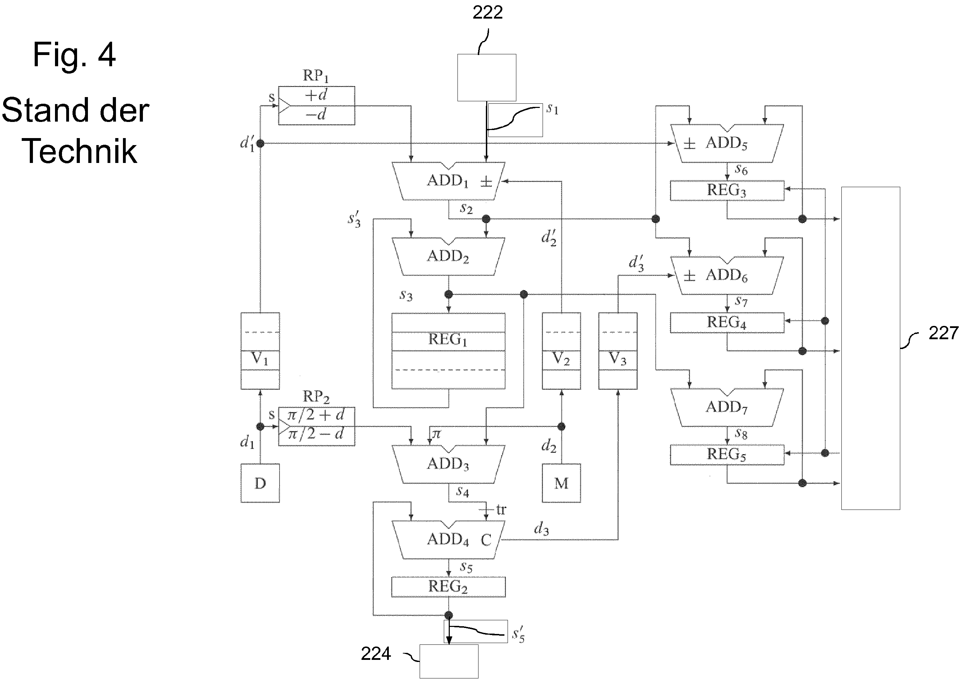

Eine digitale Auswerteschaltung 223 gemäß dem Stand der Technik ist in Fig. 4 skizziert.

Da über $a_1$ und $c_1$ eine Beziehung der digitalen Datenworte $y_{DA}$ auf die optische Phase $\varphi$ hergestellt wird, kann durch geeignete Wahl von $a_1$ derart, dass gilt $a_1 c_1 = 1$, erreicht werden, dass den einzelnen Bits im dem Eingangssignal 127 entsprechenden Datenwort $y_{DA}$ Phasenverschiebungen $\varphi$ am Modulator der Größe $\pi 2^k$ entsprechen. Um die weiteren Ausführungen zu vereinfachen, werden diese Werte $\gamma_k = \pi 2^k$ direkt den Stellenwertigkeiten der Bits des digitalen Datenworts zugeordnet. Diese Vereinbarung soll außer für $y_{DA}$ für alle digitalen Datenworte der digitalen Auswerteschaltung 223 gelten, d.h., auch für die Datenworte $s_i$, i=1, ...,8, $s_3'$, $s_5'$, $y_{a0}$, $y_{a1}$ und $y_\Omega$ aus Fig. 4. Das bedeutet, dass, abweichend von der Konvention, sich der Zahlenwert eines Datenworts s mit den Bits $\alpha_k$, k=1,...,m gemäß

$$s = \sum_{k=1}^{m} \alpha_k \gamma_k, \qquad \gamma_k = \pi \cdot 2^k$$

berechnet. Dabei ist $\alpha_1$ das "least significant bit" (LSB) und $\alpha_m$ das MSB des Datenworts. Für das Datenwort $y_{DA}$ mit den Bits $\alpha_k'$, k = l'...m' ist dann

$$y_{DA} = \sum_{k=1'}^{m'} \alpha_k' \pi \cdot 2^k$$

Wegen $\varphi = a_1 c_1 y_{DA}$ ist für $a_1 c_1 = 1$ die Phasenverschiebung im Phasenmodulator 210 $\varphi = y_{DA}$. Damit gilt in diesem Fall

$$\varphi = \sum_{k=1'}^{m'} \alpha_k' \pi \cdot 2^k$$

Wie gezeigt wird, ist m' = 0.

Das vom AD-Wandler 222 gelieferte Eingangssignal $x_{AD}$ wird als internes Signal $s_1$ auf einen Eingang des Addierers $ADD_1$ gegeben. Dabei wird, abhängig von einem Demodulationssignal $d_2'$, das die Werte 0 oder 1 annehmen kann, noch eine Bewertung mit $1 - 2d_2'$, also mit +1 oder -1 durchgeführt. Das Demodulationssignal $d_2'(i)$ ist das um n Takte durch einen Verzögerer $V_2$ verzögerte, von einem Zufallszahlengenerator M gelieferte Modulationssignal $d_2(i)$, d.h. $d_2'(i) = d_2(i-n)$. Die Größe n ist innerhalb vorgegebener Grenzen voreinstellbar, und dient zur Laufzeitanpassung an den externen Signalpfad. Die Signale $d_2$ bzw. $d_2'$ können jeweils zwei Zustände (0 oder 1) annehmen. Für $d_2' = 0$ erfolgt in der Stufe $ADD_1$ eine Addition, für $d_2' = 1$ eine Subtraktion der Größe $s_1$. Der andere Eingang des Addierers ist mit einem Registerpaar $RP_1$ verbunden, in das zwei vorgegebene Werte +d und -d eingespeichert sind. Die Testgröße $\pm d$ wird, wie später gezeigt wird, als zusätzliches Signal in den Hauptregelkreis eingespeist, mit dem Ziel, dessen Schleifenverstärkung zu "messen" und diese mit einem Hilfsregelkreis, der einen steuerbaren Verstärker beeinflusst, auf einen definierten Sollwert zu regeln. Das dem Nutzsignal überlagerte Testsignal $\pm d$ soll hinreichend klein gewählt werden, um Übersteuerungen des externen Kreiselpfads zu vermeiden. Bei korrekt eingestellter Verstärkung kommt es, wie gezeigt wird, zu einer exakten Kompensation dieses Testsignals, so dass die Messgenauigkeit des Sensors unbeeinflusst bleibt. Für die Auswahl des jeweils gewünschten Wertes ist ein "Selekt"-Eingang s vorhanden, der von einem Signal $d_1'$ gesteuert wird. Der ausgewählte, am Addierereingang wirksame Wert ist $(2d_1' - 1) \cdot d$. Damit ist

$$s_2(i) = 2d_1'(i) - 1) \cdot d - (2d_2'(i) - 1) \cdot s_1(i)$$

Das Signal $d_1'$ entsteht, analog zu $d_2'$, durch n-stufige Verzögerung mit Hilfe von $V_1$ aus dem Signal $d_1$. Das Signal $d_1$ wird durch einen von M unabhängigen Zufallszahlengenerator D erzeugt. Die von $ADD_1$ erzeugte Summe $s_2$ wird auf die Eingänge von zwei weiter unten beschriebenen Mittelwertbildern mit $ADD_5$ und $ADD_6$ sowie auf den Eingang eines Addierers ADD2 geführt. Dessen Summenausgang $s_3$ wird auf eine Registerkette $REG_1$ gegeben, und als um n Takte verzögertes Signal $d_1$ auf den anderen Addierereingang zurückgeführt:

$$s_3(i) = s_3(i-n) + s_2(i)$$

Daneben speist $s_3$ noch den Mittelwertbilder mit $ADD_7$, der weiter unten erklärt wird, sowie den Addierer ADD3. Auf den anderen Eingang von ADD3 wird mit der Wertigkeit $\pi$ das oben beschriebene, vom Zufallszahlengenerator M gelieferte Signal $d_2$ eingespeist. Auf die Stellen kleinerer Wertigkeit ($\pi/2$, $\pi/4$,...) desselben Eingangs ist der selektierbare Ausgang eines Registerpaars RP2 mit den eingespeicherten Werten $\pi/2+d$ und $\pi/2-d$ geschaltet. Die Selektion erfolgt mit dem oben beschriebenen Signal $d_1$, das vom Zufallszahlengenerator D erzeugt wird. Damit wird

$$s_4(i) = s_3(i) + \pi/2 + d_{2\pi} + (2d_1 - 1) \cdot d$$

Vom Summensignal $s_4$ des Addierers $ADD_3$ werden nun an der Stelle "tr" alle Bits mit der Wertigkeit $2\pi$ und größer abgetrennt. Dieser Vorgang entspricht einer Modulo-$2\pi$-Operation.

Die verbleibenden Bits werden auf den Eingang des aus $ADD_4$ und $REG_2$ bestehenden Phasenintegrators geführt. Der Summenausgang $s_5$ von $ADD_4$ enthält ebenfalls nur alle Bits mit Wertigkeiten kleiner als $2\pi$. Er wird durch $REG_2$ um einen Takt verzögert, und auf den anderen Addierereingang zurückgeführt. Das bei der Addition entstehende Übertragsbit C wird als Signal $d_3$ auf die Verzögererkette $V_3$ gegeben. Dadurch wird

$$s_5(i) = \mod 2\pi \big[ s_5(i-1) + \mod 2\pi [s_4(i)] \big]$$

$$d_3(i) = \frac{s_5(i-1) + \mod 2\pi [s_4(i)] - s_5(i)}{2\pi}$$

Gleichzeitig wird der Ausgang von $REG_2$ als Eingangssignal 127 dienendes Ausgangssignal $y_{DA}$ nach außen auf den DA-Wandler geführt.

Die Signale $s_2$ bzw. $s_3$ werden, wie oben erwähnt, auf drei Mittelwertbilder geführt. Diese sind von außen rücksetzbare Akkumulatoren, die über eine vorgegebene Zeitspanne von m Taktzyklen das zu mittelnde Signal aufsummieren.

Der gemittelte Drehratenwert $y_\Omega$ entsteht durch Akkumulation von $s_3$ mit $ADD_7$ und $REG_5$:

$$y_\Omega = \sum_{i=1}^{m} s_3(i)$$

Die Stellgröße $y_{a0}$ entsteht durch eine mit $ADD_5$ und $REG_5$ durchgeführte Akkumulation von $s_2$, wobei eine zusätzliche, von $d_1'$ abhängige Gewichtung von $s_2$ mit +1 oder -1 vorgenommen wird:

$$y_{a0} = \sum_{i=1}^{m} s_2(i)(2d_1'(i) - 1)$$

Entsprechend entsteht $y_{a1}$ durch von $d_3'$ abhängige, gewichtete Akkumulation von $s_2$ mit $ADD_6$ und $REG_4$. $d_3'$ ist das durch $V_3$ um n Takte verzögerte Signal $d_3$, das aus dem Übertragsbit C mit der Wertigkeit $2\pi$ des Addierers ADD4 des Phasenintegrators gebildet wird:

$$y_{a1} = \sum_{i=1}^{m} s_2(i)(2d_3'(i) - 1)$$

Es sei nun zunächst angenommen, dass die Faktoren $a_0$ und $a_1$ so eingestellt sind, dass $a_0c_0=1$ und $a_1c_1=1$ gilt. Außerdem seien aufgrund der Eigenschaften der Wandler noch n - 1 Totzeiten zu berücksichtigen. Dann ist

$$x_{AD}(i+n) = \cos(\Omega \cdot S + y_{DA}(i+1) - y_{DA}(i))$$

Wie in Fig. 4 gezeigt gilt $y_{DA}(i) = s_5'(i)$ und $y_{DA}(i+1) = s_5(i)$. Außerdem

gilt

$$s_4(i) = s_5(i) - s_5'(i) + k \cdot 2\pi$$

Die $k \cdot 2\pi$-fache Abweichung ergibt sich infolge der bei "tr" stattfindenden Modulo-$2\pi$-Operation. Der Term $k.2\pi$ kann im Argument der Kosinusfunktion aufgrund ihrer Periodizität weggelassen werden. Daher ist

$$s_1(i+1)x_{AD}(i+n) = \cos(\Omega \cdot S + s_4(i))$$

Zunächst sei in den beiden Registerpaaren $RP_1$ und $RP_2$ d=0. Dann gilt:

$$s_4(i) = s_3(i) + \pi / 2 + d_{2\pi})$$

und wegen cos(x+π/2) = -sin(x) sowie sin(x) = -sin(x+π) und $s_1=x_{AD}$:

$$s_1(i+n) = \sin(\Omega \cdot S + s_3(i)) \cdot (2d_2(i) - 1)$$

Andererseits ist

$$s_2(i+n) = -s_1(i+n) \cdot (2d_2'(i+n) - 1)$$
$$= s_1(i+n) \cdot (2d_2(i) - 1)$$

Daraus folgt nun

$$s_2(i+n) = -\sin(\Omega \cdot S + s_3(i))$$

Die digitale Auswerteschaltung 223 ist ein geschlossener Regelkreis, der versucht, die Regelabweichung ($\Omega$ S+$s_3$(i)) möglichst klein zu machen. Wenn diese im Argument der Sinusfunktion stehende Größe klein ist, kann der Sinus näherungsweise durch sein Argument ersetzt werden, und es gilt:

$$s_2(i+n) = -\Omega \cdot S - s_3(i)$$

oder, in z-transformierter Form:

$$s_2(z) = -z^{-n}(\Omega \cdot S + s_3(z))$$

Die nachfolgende, aus $ADD_2$ und $REG_1$ zusammengesetzte Stufe mit der Übertragungsfunktion

$$\frac{S_3(z)}{S_2(z)} = \frac{1}{1-z^{-n}}$$

schließt den Regelkreis. Aus den letzten beiden Gleichungen erhält man durch Elimination der Größe $S_2(z)$ die Beziehung

$$S_3(z) = -z^{-n}\Omega \cdot S$$

Das Signal $s_3$ ist also der Drehrate $\Omega$ proportional. Der aus $ADD_7$ und $REG_5$ bestehende Mittelwertbilder erzeugt daraus das Signal $y_\Omega$.

Die vorausgegangene Erklärung geht davon aus, dass die Bedingung $a_1c_1=1$ erfüllt ist. Ein besonderer Hilfsregelkreis soll $a_1$ nachregeln, bis diese Forderung erfüllt ist. Dabei macht man von der Tatsache Gebrauch, dass die digital durchgeführte Modulo-$2\pi$-Operation ein zusätzliches Fehlersignal erzeugt, wenn im Interferometer die Phase nicht um exakt den der Modulo-Operation entsprechenden Wert $2\pi$ springt. Die am Phasendetektor wirksame Phase ist

$$\varphi_d(i+1) = \Omega \cdot S + a_1c_1(s_5(i) - s_5(i-1))$$

Falls das Produkt $a_1c_1$ vom Idealwert 1 abweicht, kommt zur "idealen" Detektorphase noch ein Phasenfehler

$$\varphi_e(i+1) = (a_1c_1 - 1)(s_5(i) - s_5(i-1))$$

hinzu. Nach der Demodulation erscheint dieser Phasenfehler als zusätzliches Drehratensignal. Dieses Fehlersignal ist also die mit $s_5(i)-s_5(i-1)$ modulierte Skalenfaktorabweichung. Es gilt aber

$$s_5(i) - s_5(i-1) = \mathrm{mod}2\pi[s_4(i)] - 2\pi d_3(i)$$

Die rechte Seite dieser Gleichung kann als Zweierkomplementzahl mit dem Vorzeichenbit $d_3$ interpretiert werden. Damit ist $d_3$ das Vorzeichen des die Skalenfaktorabweichung $(a_1c_1-1)$ modulierenden Signals $s_5(i)-s_5(i-1)$. Der solchermaßen modulierte Fehler erscheint nach n Takten am Knoten $s_2$ und kann mit dem ebenfalls um n Takte verzögerten Vorzeichen $d'_3(i)$ demoduliert werden, um eine Regelgröße für $a_1$ ableiten zu können. Dies geschieht mit dem aus ADD6 und REG4 aufgebauten Mittelwertbilder. Die zusätzliche Demodulation erfolgt über den $\pm$-Steuereingang des Addierers. Das gemittelte Signal am Ausgang $y_{a1}$ ist demnach ein Maß für die Abweichung des Faktors $a_1$ vom Sollwert

(gegeben durch $a_1c_1=1$) und wird dazu verwendet, den Faktor auf den Sollwert einzustellen.

Für die Stabilität des Hauptregelkreises ist es notwendig, dass die Schleifenverstärkung den korrekten, durch $a_0c_0=1$ bestimmten Wert hat. Damit diese Bedingung stets erfüllt ist, ist zur Einstellung von $a_0$ ein Hilfsregelkreis vorgesehen. Für $\Omega=0s_2$ ist das um n Takte verzögerte Signal $-s_3$. Für $\Omega=0$ und $a_0c_0\neq1$ gilt

$$s_2(i+n) = -a_0c_0s_3(i)$$

Damit nun automatisch ein Maß für die Abweichung des Faktors $a_0$ vom Idealwert gefunden werden kann, wird in das Registerpaar $RP_2$ zusätzlich zu dem Wert $\pi/2$ noch eine kleine Testgröße $+d$ und $-d$ eingespeichert. Dadurch wird nun in den Addierer $ADD_3$ zu $s_3$ ein zusätzliches, im Vorzeichen vom Zufallszahlengenerator D gesteuertes Testsignal $2d_1(i)-1\cdot d$ eingespeist. Interessiert man sich nur für die Auswirkung des Testsignals allein, so gilt

$$s_2(i+n) = -a_0c_0 \cdot (2d_1(i) - 1) \cdot d$$

Werden nun in das Registerpaar $RP_1$ dieselben Testgrößen $+d$ und $-d$ eingespeichert, so wird zu $s_2(i+n)$ das Testsignal $(2d_1(i+n)-1)\cdot d$ addiert und es gilt

$$s_2(i+n) = (1 - a_0c_0)(2d_1(i) - 1) \cdot d$$

Es ist also am Knoten eine mit $(1-a_0c_0)$ bewertete Komponente des Testsignals vorhanden. Diese wird mit dem Mittelwertbilder $ADD_5$ und $REG_3$, dessen Eingangssignal $s_2$ noch zusätzlich mit dem Vorzeichen des Testsignals bewertet wird, herausgefiltert. Dadurch ist das gemittelte Signal $y_{a0}$ ein Maß für die Abweichung des Produkts aoco von 1 und kann zur Einstellung von $a_0$ auf dessen Sollwert verwendet werden.

Mit der oben beschriebenen in der Steuereinheit 220 integrierten digitalen Auswerteschaltung 223 ist es also möglich, sowohl die Drehrate $\Omega$ als auch die zu deren Ermittlung notwendigen Parameter zu bestimmen. Zudem gibt die Auswerteschaltung 223 das Signal $y_{DA}$ aus, das in die Phasenmodulation eingeht. Aus diesem Signal $y_{DA}$ wird dann von der Steuereinheit 220 das Steuersignal 125 erzeugt.

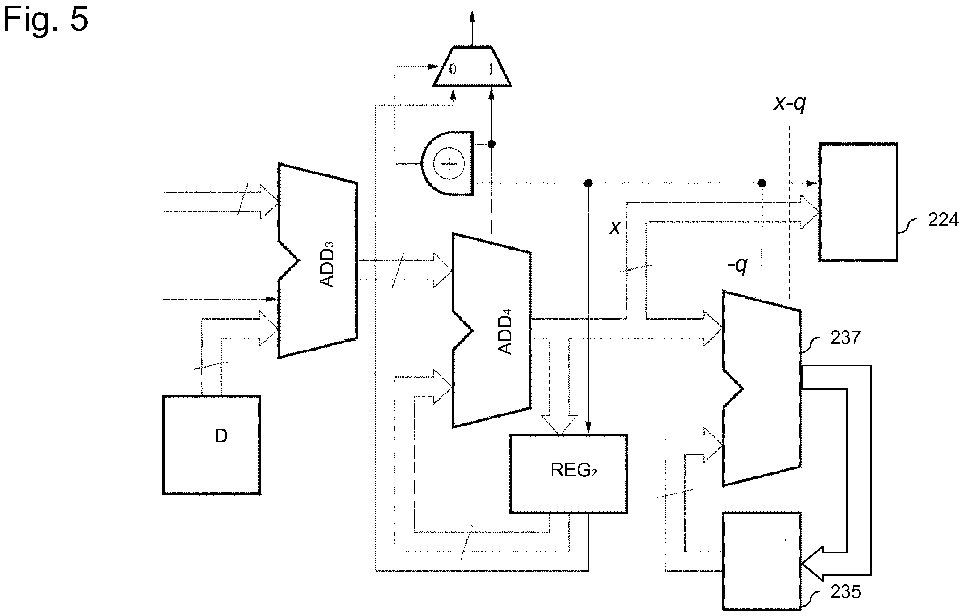

Eine dazu verwendbare Abänderung der digitalen Auswerteschaltung 223 gemäß des Beispiels der schaltungstechnischen Realisierung aus Fig. 2 ist in Fig. 5 gezeigt. Fig. 5 zeigt die Elemente D, $ADD_3$, $ADD_4$ und $REG_2$ aus Fig. 4, die zur Ausgabe des Signals $y_{DA}$ benötigt werden.

Anstatt das Signal $y_{DA}$ aber direkt an den DA-Wandler 224 weiterzugeben, wird das Signal $y_{DA}$ mittels einer aus einem Register 235 und einem Addierer 237 bestehenden Integriereinheit und dem daraus resultierenden Zusatzbit wie oben in Fig. 2 beschrieben modifiziert. Das Signal $y_{DA}$ entspricht hier also dem Eingangssignal 127 mit Wert x.

Die in Fig. 5 gezeigte Schaltung wird für einen Aussteuerbereich des Phasenmodulators 210 von $4\pi$ verwendet, d.h. für $q = 2\pi$.

Das gesetzte Zusatzbit verschiebt den Wert des Steuersignals 125 von dem ersten Wert auf den zweiten Wert und damit die angesteuerten Arbeitspunkte um einen Betrag von $2\pi$. Dies ändert aber das Vorzeichen der Steigung des betreffenden Arbeitspunktes nicht und lässt somit ein Demodulationssignal unverändert. Damit ist die Korrelationsfreiheit des Demodulationssignals gegeben, obwohl nun eine Ansteuerung mit unterdrückten niederfrequenten Komponenten erzielt wird.

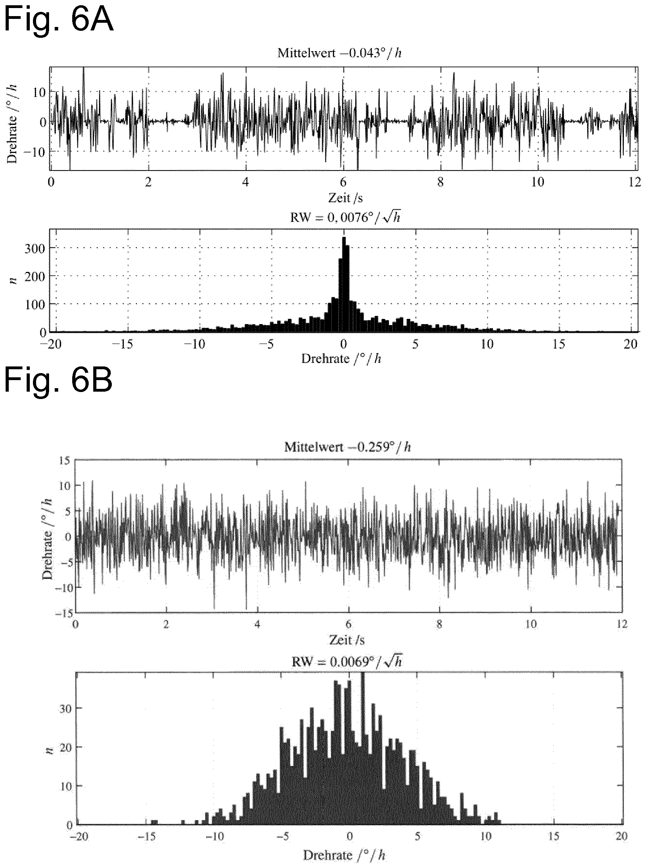

In den Fig. 6A bis 6C ist anhand von Diagrammen schematisch gezeigt, wie sich die Messgenauigkeit eines faseroptischen Kreisels bei Drehraten gleich null bei Benutzung eines oben beschriebenen Steuersystems verbessert.

Fig. 6A zeigt im oberen Diagramm die Drehrate in °/h gegen die Zeit für einen faseroptischen Kreisel mit einem Steuersystem gemäß dem Stand der Technik bei einer Drehrate von 0°/h. Hier wäre bei einem fehlerlos funktionierenden System zu erwarten, dass nur statistisch verteiltes Rauschen auftritt, d.h. dass die Werte für die Drehrate gaußverteilt sind. Wie deutlich zu erkennen ist, zeigt die Messkurve Einschnürungen beim Wert 0°/h, d.h. es tritt ein Lock-In-Effekt auf, der die Messung systematisch verzerrt. Die Messergebnisse sind nicht mehr rein gaußverteilt. Dies ist auch im unteren Diagramm der Fig. 6A gut zu erkennen, das die Häufigkeitsverteilung für verschiedene Messwerte darstellt. Es ist klar zu erkennen, dass es sich um kein reines, gaußverteiltes Rauschen handelt, da eine deutliche Überhöhung der Verteilung bei 0°/h auftritt.

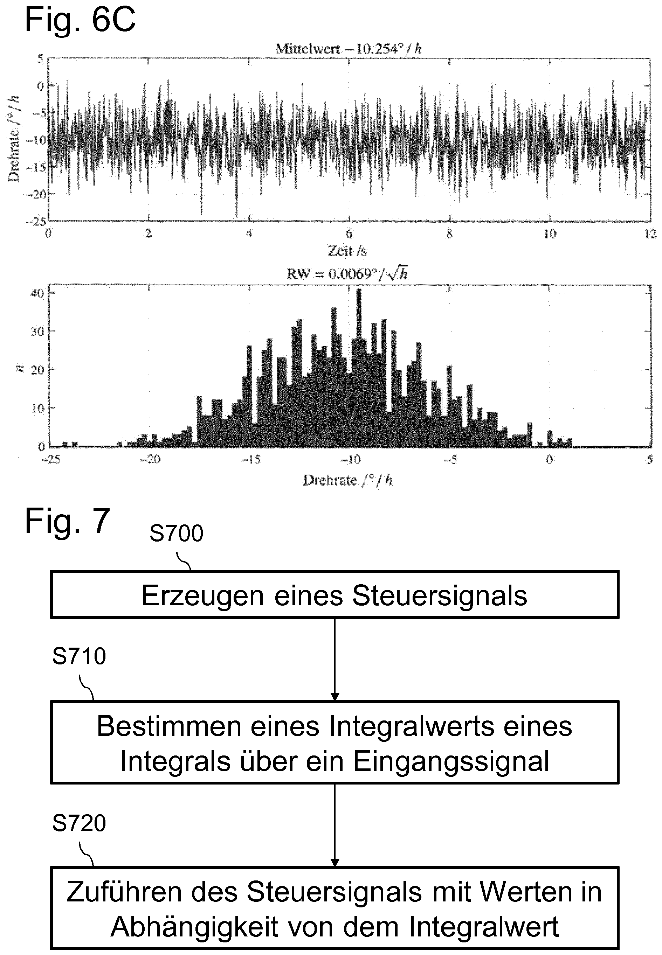

Fig. 6B und 6C zeigen die gleichen Diagramme für die Schaltungen aus Fig. 5, d.h. für wie oben beschrieben erzeugte Steuersignale 125 mit $q = 2\pi$. Es ist deutlich zu erkennen, dass die Messung nun nur noch vom statistischen Rauschen beeinflusst wird, d.h. die Häufigkeitsverteilung der Messwerte folgt einer Gaußkurve mit Zentrum bei 0°/h und die Messwerte zeigen keine Einschnürungen auf 0°/h mehr. Ähnliche Verbesserungen ergeben sich auch beim Vergleich von Messungen, die bei kleinen Drehraten durchgeführt wurden, wie zum Beispiel beim Gyrokompassing, bei dem Anteile der Erddrehrate von 15°/h möglichst exakt vermessen werden müssen.

Fig. 7 zeigt ein schematisches Flussdiagramm eines Verfahrens zur Phasenmodulation. Bei S700 wird ein Steuersignal erzeugt, um dessen Größe eine Phase moduliert wird.

Bei S710 wird ein Integralwert eines Integrals über ein Eingangssignal bestimmt.

Bei S720 wird dem Phasenmodulator das Steuersignal zugeführt, dessen Wert in Abhängigkeit von dem Integralwert einen ersten Wert oder einen zweiten Wert annimmt.

Damit ist es möglich, mit einem Steuersystem für einen faseroptischen Kreisel, das ein Steuersignal zur Phasenmodulation erzeugt, den Lock-In-Effekt bei 0°/h zu reduzieren und dadurch die Verlässlichkeit der Messergebnisse bei Drehraten nahe 0°/h zu erhöhen.

**Patentansprüche**

1. Steuersystem (100) für einen faseroptischen Kreisel mit:

   einem Phasenmodulator (110) zum Modulieren einer Phase eines Lichtsignals (115);
   einer Steuereinheit (120) zum Erzeugen eines Steuersignals (125), um dessen Größe die Phase moduliert wird und das dem Phasenmodulator zugeführt wird;
   einer Integriereinheit (130) zum Bestimmen eines Integralwerts eines Integrals über ein Eingangssignal (127), das zum Modulieren der Phase geeignet ist;
   **dadurch gekennzeichnet, dass**
   das Steuersignal (125) einen ersten Wert annimmt, der dem Eingangssignal (127) entspricht, wenn der Integralwert kleiner oder gleich einem Schaltgrenzwert ist, und das Steuersignal (125) einen zweiten Wert annimmt, der gegenüber dem Eingangssignal (127) um einen festen Betrag verschoben ist, wenn der Integralwert größer als der Schaltgrenzwert ist.

2. Steuersystem (100) nach Anspruch 1, wobei das Steuersignal (125) den ersten Wert und den zweiten Wert derart annimmt, dass es mittelwertfrei ist.

3. Steuersystem (100) nach einem der vorherigen Ansprüche, wobei die Steuereinheit (120) geeignet ist, den Integralwert um einen vorgegebenen Betrag zu reduzieren.

4. Steuersystem (100) nach Anspruch 3, wobei die Steuereinheit (120) geeignet ist, den Integralwert dann um einen vorgegebenen Betrag zu reduzieren, wenn der Integralwert einen Rücksetzgrenzwert überschreitet.

5. Steuersystem (100) nach einem der vorherigen Ansprüche, wobei der feste Betrag den Wert $q = 2\pi$ hat.

6. Steuersystem (100) nach einem der vorherigen Ansprüche, wobei das Eingangssignal (127) eine Überlagerung eines Rechtecksignals und eines Rampensignals ist.

7. Steuersystem (100) nach einem der vorherigen Ansprüche, wobei
das Steuersignal (125) eine Wortbreite aufweist, die um 1 Bit breiter ist als die Wortbreite des Eingangssignals (127);
sich das Steuersignal (125) nur in einem Zusatzbit von dem Eingangssignal (127) unterscheidet; und
ein Wert des Zusatzbits bestimmt, ob das Steuersignal (125) den ersten Wert oder den zweiten Wert annimmt.

8. Steuersystem (100) nach einem der vorherigen Ansprüche, wobei
der Phasenmodulator (110) einen Integrierten Optischen Multifunktions-Chip aufweist, der das Steuersignal (125) empfängt.

9. Faseroptischer Kreisel (200) mit einem Steuersystem (100) nach einem der vorherigen Ansprüche und mit:

einer Lichtquelle (201) zum Emittieren von Licht mit einer bestimmten Wellenlänge;
einem Strahlteiler (203) zum Teilen des Lichts aus der Lichtquelle (201) in zwei einlaufende Strahlen, die in den Phasenmodulator (210) geleitet werden, und zum Überlagern von zwei aus dem Phasenmodulator (210) austretenden auslaufenden Strahlen zu einem Detektionsstrahl;
einer Spule (204) zum gegenläufigen Umlaufen der in dem Phasenmodulator (210) empfangenen einlaufenden Strahlen, bevor sie als zwei auslaufende Strahlen dem Phasenmodulator (210) wieder zugeführt werden;
einem Detektor (205) zum Messen einer Intensität des Detektionsstrahls, die an die Steuereinheit (220) weitergeben wird; wobei
die Steuereinheit (220) aus der gemessenen Intensität eine Drehrate um eine Zentralachse der Spule (204) und das Steuersignal (125) bestimmt.

10. Faseroptischer Kreisel (200) nach Anspruch 9, wobei
der Phasenmodulator (210) geeignet ist, die Phasen der zwei einlaufenden Strahlen und die Phasen der zwei auslaufenden Strahlen derart zu modulieren, dass die Intensität des Detektionsstrahls an vorbestimmten Arbeitspunkten messbar ist.

11. Faseroptischer Kreisel (200) nach Anspruch 10, wobei
die Arbeitspunkte aufeinanderfolgende Punkte maximaler Steigung der gegen die Phase aufgetragenen Intensität des Detektionsstrahls sind und 8 Arbeitspunkte benutzt werden.

12. Faseroptischer Kreisel (200) nach einem der Ansprüche 9 bis 11, wobei der faseroptische Kreisel (200) ein faseroptisches Sagnac-Interferometer ist.

13. Verfahren zur Phasenmodulation eines Phasenmodulators (110) eines faseroptischen Kreisels (100) mit den Schritten:

Erzeugen eines Steuersignals (125), um dessen Größe die Phase moduliert wird;
Bestimmen eines Integralwerts eines Integrals über ein Eingangssignal (127), das zum Modulieren der Phase geeignet ist;
Zuführen des ersten Steuersignals (125) zu dem Phasenmodulator (110);
**dadurch gekennzeichnet, dass**
das Steuersignal (125) einen ersten Wert annimmt, der dem Eingangssignal (127) entspricht, wenn der Integralwert kleiner oder gleich einem Schaltgrenzwert ist, und das Steuersignal (125) einen zweiten Wert annimmt, der gegenüber dem Eingangssignal (127) um einen festen Betrag verschoben ist, wenn der Integralwert größer als der Schaltgrenzwert ist.

**Claims**

1. A control system (100) for a fiber-optic gyroscope, comprising:

a phase modulator (110) for modulation a phase of a light signal (115);
a control unit (120) for generating a control signal (125), by the value of which the phase is modulated and that is fed to the phase modulator (110);
an integrating unit (130) for determining an integral value of an integral over an input signal (127) that is suitable for modulating the phase;
**characterized in that**
the control signal (125) takes on a first value that corresponds to the input signal (127), when the integral value is smaller than or equal to a switching threshold, and the control signal (125) takes on a second value that is shifted by a fixed amount with respect to the input signal (127), when the integral value is larger than the switching threshold.

2. The control system (100) according to claim 1, wherein
the control signal (125) takes on the first value and the second value such that it becomes zero-mean.

3. The control system (100) according to one of the preceding claims, wherein
the control unit (120) is configured to reduce the integral value by a predetermined amount.

**4.** The control system (100) according to claim 3, wherein
the control unit (120) is configured to reduce the integral value by a predetermined amount, when the integral value exceeds a reset threshold.

**5.** The control system (100) according to one of the preceding claims, wherein
the fixed amount has the value of q = $2\pi$.

**6.** The control system (100) according to one of the preceding claims, wherein
the input signal (127) is a superposition of a square wave signal and a ramping signal.

**7.** The control system (100) according to one of the preceding claims, wherein
the control signal (125) has a word length that is by 1 bit wider than the word length of the input signal (127);
the control signal (125) differs only by an additional bit from the input signal (127); and
the value of the additional bit determines whether the control signal (!25) takes on the first value or the second value.

**8.** The control system (100) according to any one of the preceding claims, wherein
the phase modulator (110) comprises a multifunctional integrated optical chip that receives the control signal (125).

**9.** A fiber-optic gyroscope (200) having a control system (100) according to any one of the preceding claims and comprising:

a light source (201) for emitting light having a predetermined wavelength;
a beam splitter (203) for splitting the light from the light source (201) into two incoming beams that are fed into the phase modulator (210), and for superposing two outgoing beams coming out of the phase modulator (210) to form a detection beam;
a coil (204) for guiding therein in opposite directions the incoming beams received by the phase modulator (210), before they are fed into the phase modulator (210) as the two outgoing beams;
a detector (205) for measuring an intensity of the detection beam, which intensity is provided to the control unit (220); wherein
the control unit (220) determines from the measured intensity a rotation rate around a central axis of the coil (204) and the control signal (125).

**10.** The fiber-optic gyroscope (200) according to claim 9, wherein

the phase modulator (210) is configured to modulate the phases of the two incoming beams and the phases of the two outgoing beams such that the intensity of the detection beam can be measured at predetermined working points.

**11.** The fiber-optic gyroscope (200) according to claim 10, wherein
the working points are subsequent points having maximal gradient of intensity of the detection beam plotted against the phase, and 8 working points are used.

**12.** The fiber-optic gyroscope (200) according to any one claims 9 to 11, wherein the fiber-optic gyroscope (200) is a fiber-optic Sagnac interferometer.

**13.** A method for phase modulating a phase modulator of a fiber optic gyroscope (200) comprising the steps:

generating a control signal (125) by the value of which the phase is modulated;
determining an integral value of an integral over an input signal (127) that is suitable for modulating the phase;
supplying the first control signal (125) to the phase modulator (110);
**characterized in that**
the control signal (125) takes on a first value that corresponds to the input signal (127), when the integral value is smaller than or equal to a switching threshold, and the control signal (125) takes on a second value that is shifted by a fixed amount with respect to the input signal (127), when the integral value is larger than the switching threshold.

**Revendications**

**1.** Système de commande (100) pour un gyroscope à fibre optique avec :

un modulateur de phase (110) pour moduler une phase d'un signal lumineux (115) ;
une unité de commande (120) pour produire un signal de commande (125) de la grandeur duquel la phase est modulée et qui est transmis au modulateur de phase ;
une unité d'intégration (130) pour déterminer une valeur intégrale d'une intégrale par un signal d'entrée (127) qui est apte à moduler la phase ;
**caractérisé en ce que** le signal de commande (125) adopte une première valeur qui correspond au signal d'entrée (127) si la valeur intégrale est inférieure ou égale à une valeur limite de commutation, et le signal de commande (125) adopte une deuxième valeur qui est décalée d'un montant fixe par rapport au signal d'entrée (127) si la valeur intégrale est supérieure à une valeur limite de commutation.

2. Système de commande (100) selon la revendication 1, dans lequel

le signal de commande (125) adopte la première valeur et la deuxième valeur de telle sorte qu'il soit de valeur moyenne nulle.

3. Système de commande (100) selon l'une des revendications précédentes, dans lequel

l'unité de commande (120) est apte à réduire d'un montant prédéfini la valeur d'intégrale.

4. Système de commande (100) selon la revendication 3, dans lequel

l'unité de commande (120) est apte à réduire d'un montant prédéfini la valeur d'intégrale quand la valeur d'intégrale dépasse une valeur limite de remise à zéro.

5. Système de commande (100) selon l'une des revendications précédentes, dans lequel

le montant fixe a la valeur q=2π.

6. Système de commande (100) selon l'une des revendications précédentes, dans lequel

le signal d'entrée (127) est une superposition d'un signal rectangulaire et d'un signal en rampe.

7. Système de commande (100) selon l'une des revendications précédentes, dans lequel

le signal en rampe (125) présente une largeur de mot qui est plus large de 1 bit que la largeur de mot du signal d'entrée (127) ;

le signal de commande (125) n'est différent du signal d'entrée (127) que dans un bit supplémentaire ; et une valeur du bit supplémentaire détermine si le signal de commande (125) adopte la première valeur ou la deuxième valeur.

8. Système de commande (100) selon l'une des revendications précédentes, dans lequel

le modulateur de phase (110) comporte une puce optique multifonction intégrée qui reçoit le signal de commande (125).

9. Gyroscope à fibre optique (200) avec un système de commande (100) selon l'une des revendications précédentes et avec :

une source lumineuse (201) pour émettre de la lumière avec une longueur d'onde définie ;
un séparateur de faisceau (203) pour séparer la lumière provenant de la source lumineuse (201) en deux faisceaux entrants qui sont amenés dans le modulateur de phase (210), et pour superposer en un faisceau de détection deux faisceaux sortants qui sortent du modulateur de phase (210) ;
une bobine (204) pour la circulation contraire des faisceaux entrants reçus dans le modulateur de phase (210) avant qu'ils ne soient ramenés comme deux faisceaux sortants dans le modulateur de phase (210) ;
un détecteur (205) pour mesurer une intensité du faisceau de détection qui est transmise à l'unité de commande (220) ; dans lequel
l'unité de commande (220) détermine à partir de l'intensité mesurée une vitesse de rotation autour d'un axe central de la bobine (204) et le signal de commande (125).

10. Gyroscope à fibre optique (200) selon la revendication 9, dans lequel

le modulateur de phase (210) est apte à moduler les phases des deux faisceaux entrants et les phases des deux faisceaux sortants de telle sorte que l'intensité du faisceau de détection soit mesurable à des points de fonctionnement prédéfinis.

11. Gyroscope à fibre optique (200) selon la revendication 10, dans lequel

les points de fonctionnement sont des points successifs à pente maximale de l'intensité du faisceau de détection appliquée contre la phase, et 8 points de fonctionnement sont utilisés.

12. Gyroscope à fibre optique (200) selon l'une des revendications 9 à 11, dans lequel

le gyroscope à fibre optique (200) est un interféromètre de Sagnac à fibre optique.

13. Procédé pour la modulation de phase d'un modulateur de phase (110) d'un gyroscope à fibre optique (200), avec les étapes

de production d'un signal de commande (125) de la grandeur duquel la phase est modulée ;
de détermination d'une valeur intégrale d'une intégrale par un signal d'entrée (127) qui est apte à moduler la phase ;
de transmission du premier signal de commande (125) au modulateur de phase (110) ;
**caractérisé en ce que**
le signal de commande (125) adopte une première valeur qui correspond au signal d'entrée (127) si la valeur intégrale est inférieure ou égale à une valeur limite de commutation, et le signal de commande (125) adopte une deuxième valeur qui est décalée d'un montant fixe par rapport au signal d'entrée (127) si la valeur intégrale est supérieure à une valeur limite de commutation.

Fig. 1A

Fig. 1B

# Fig. 2

## Fig. 3

EP 3 446 068 B1

Fig. 4
Stand der Technik

Fig. 5

EP 3 446 068 B1

# Fig. 6A

# Fig. 6B

## Fig. 6C

Mittelwert −10.254°/ℎ

RW = 0.0069°/√ℎ

## Fig. 7

S700

Erzeugen eines Steuersignals

S710

Bestimmen eines Integralwerts eines Integrals über ein Eingangssignal

S720

Zuführen des Steuersignals mit Werten in Abhängigkeit von dem Integralwert

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0652417 A1
- DE 3144162 A1

- EP 2778611 A1